# EUROPEAN PATENT SPECIFICATION

(11) **EP 3 108 020 B1**
(45) Date of publication and mention of the grant of the patent: **06.01.2021**
(21) Application number: 15754722.5
(22) Date of filing: 16.01.2015
(51) Int. Cl.: C21D 1/673, B23K 11/11

(54) **AN ELONGATE WELD AND A BEAM HAVING SUCH A WELD**
LÄNGLICHE SCHWEISSNAHT UND TRÄGER MIT SOLCH EINER SCHWEISSNAHT
SOUDURE ALLONGÉE ET POUTRE COMPORTANT UNE TELLE SOUDURE

(30) Priority: 17.02.2014 SE 1400087
(43) Date of publication of application: 28.12.2016
(73) Proprietor: Gestamp HardTech AB, 971 25 Luleå (SE)
(72) Inventor: HOLMBERG, Martin, S-97251 Luleå (SE); LUNDMAN, Mattias, S-94335 Öjebyn (SE)
(74) Representative: Ehrner & Delmar Patentbyrå AB
(86) International application number: PCT/SE2015/050037
(87) International publication number: WO 2015/130206

(56) References cited:
- EP-A1- 2 248 623
- WO-A1-2009/123538
- WO-A1-2011/071434

## Description

### Technical field of the invention

The invention relates to an elongate weld joint between a first steel sheet having a tensile strength above 1400 MPa and a second steel sheet wherein the first steel sheet has a soft zone with a tensile strength below 1100 MPa along the weld joint

### Background of the invention

WO 2011/071434 discloses a hat beam with a cover plate. The cover plate is welded to the side flanges of the hat beam. The hat beam is made by the press hardening process and has a tensile strength in excess of 1400 MPa. Portions of the length of its side flanges have high tensile strength and other portions have a tensile strength of less than 1100 MPa. According to conversion tables, a tensile strength of 1100 MPa corresponds to a hardness of 330 HV.

EP 2 248 623 A1 discloses a method for producing a composite part for a motor vehicle. The method comprises producing a first press-hardened sheet metal component and joining said press-hardened sheet metal component with a second component by a weld connection. During producing said press-hardened sheet metal component, lower strength is locally formed in the region of the weld connection than in other regions of said press-hardened sheet metal component.

WO 2011/071434 A1 discloses a B-pillar for a vehicle including a main section with a hat-shaped section comprising a central flange, two web portions and two side flanges. The hat-shaped section is press-hardened and has a breaking strength in excess of 1400 MPa and the side flanges of the hat-shaped section have a breaking strength below 1100 MPa along at least part of the length of the side flanges.

### Object of the invention and brief description of the invention

It is an object of the invention to strengthen a weld seam on a high strength sheet steel having a tensile strength exceeding 1400MPa by reducing the risk of microscopic cracks in the region of the weld. This is important for example for vehicle components which are designed to take up collision energy by deformation since microscopic cracks will be initiators for cracks that would reduce the capability of absorbing energy. In particular it is important for a component which is composed of a hat beam of high strength steel with a cover welded to the high strength side flanges of the hat beam.

The object of invention is met when the soft zone has a width that is between ½ the width of the weld and three times the width of the weld and the first steel sheet has hard zones with a tensile strength above 1400 MPa on both sides of the weld joint. The invention is defined by the appended independent claim 1.

### Brief description of the drawing

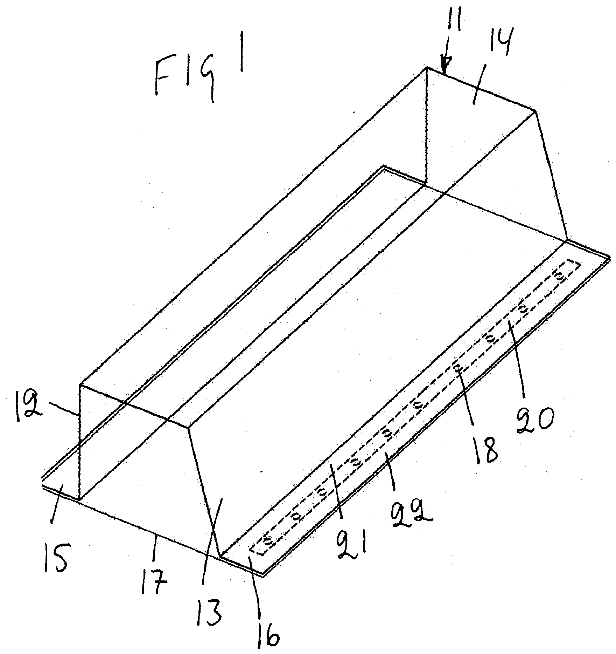

**Figure** 1 is a transparent isometric view of a short portion of the length of a hat profile with a cover.

### Description of the illustrated example of the invention

A hat profile 11 has two sides 12,13 a central flange 14, and side flanges 15,16. A cover 17 is welded to the two side flanges by a line of dots 18. The hat profile is shaped and hardened from a flat sheet steel and it has a tensile strength exceeding 1400 MPa. The cover may be a cold rolled sheet having a lower strength. The hat profile 11 and its cover 17 form a beam with closed profile.

In vehicles, hat profiles with a cover are used as safety beams, for example the A, B and C pillars and door beams. Such beams are arranged to take up energy in side collisions by being plastically deformed. As much as possible of the steel should be plastically deformed before fracture and fracture initiators should be avoided.

Along the line of weld dots 18, each side flange has a narrow soft band 20 with a tensile strength less than 1100 MPa, for example 500-1000 MPa in which the weld dots are positioned. The side flanges have full strength on both sides of the soft band. The soft band has a width that is between half the width of the weld dots and three times the width of the weld dots. The lower strength and higher ductility of the soft band eliminates the formation of micro cracks in the HAZ (Heat Affected Zone) during the welding. Such cracks may be triggers for early fracture in a side collision.

The soft bands 20 reduce the risk of early fracture but they reduce the total strength of the side flanges comparatively little since they are narrow and the side flanges have high strength on both sides 21,22 of the soft bands 20. The cover 17 has a strength exceeding 1400 MPa and have soft bands similar to the profile 11. The invention can also be applied to other high strength sheet steel items.

## Claims

1. A beam comprising
a first sheet steel profile (11) comprising a top (14), two sides (12,13) and two side flanges (15,16), and
a second steel sheet (17) joined by welds (18) to the side flanges (15, 16) to form a closed profile beam, the second steel sheet (17) forming a cover (17),
wherein the first sheet steel profile (11) has a tensile strength above 1400 MPa and soft zones (20) with a tensile strength below 1100 MPa around the welds (18),
wherein the cover (17) has a tensile strength exceeding 1400 MPa and **characterised in that** the soft zones (20) are in the form of bands (20) that have a width that is between 1 /2 the width of the weld (18) and three times the width of the weld (18), and wherein the first sheet steel profile (11) has high strength zones with a tensile strength above 1400 MPa on both sides of the soft bands (20) and the cover (17) has soft bands similar to the first sheet steel profile (11).

2. A beam according to claim 1, **characterised in that** the weld (18) comprises a single row of weld dots (18).

3. A beam according to claim 2, **characterised in that** the soft bands (20) have a tensile strength of 500-1000 MPa.

4. A beam according to any of the claims 1 to 3, **characterised in that** the first sheet steel profile (11) is a hat profile.

## Patentansprüche

1. Träger, der Folgendes umfasst:
ein erstes Stahlblechprofil (11), das eine Oberseite (14), zwei Seiten (12, 13) und zwei Seitenflansche (15, 16) umfasst, und
ein zweites Stahlblech (17), das durch Schweißstellen (18) mit den Seitenflanschen (15, 16) verbunden ist, um einen Träger mit geschlossenem Profil zu bilden, wobei das zweite Stahlblech (17) eine Abdeckung (17) bildet,
wobei das erste Stahlblechprofil (11) eine Zugfestigkeit oberhalb von 1400 MPa und weiche Zonen (20) mit einer Zugfestigkeit unterhalb von 1100 MPa um die Schweißstellen (18) herum aufweist,
wobei die Abdeckung (17) eine Zugfestigkeit jenseits von 1400 MPa aufweist und **dadurch gekennzeichnet ist,**
**dass** die weichen Zonen (20) in der Form von Bändern (20) vorliegen, die eine Breite haben, die zwischen 1/2 der Breite der Schweißnaht (18) und dreimal der Breite der Schweißnaht (18) liegt und wobei das erste Stahlblechprofil (11) Zonen mit hoher Festigkeit mit einer Zugfestigkeit oberhalb von 1400 MPa auf beiden Seiten der weichen Bänder (20) aufweist und die Abdeckung (17) weiche Bänder ähnlich dem ersten Stahlblechprofil (11) aufweist.

2. Träger nach Anspruch 1, **dadurch gekennzeichnet, dass** die Schweißnaht (18) eine einzelne Reihe von Schweißpunkten (18) umfasst.

3. Träger nach Anspruch 2, **dadurch gekennzeichnet, dass** die weichen Bänder (20) eine Zugfestigkeit von 500-1000 MPa aufweisen.

4. Träger nach einem der Ansprüche 1 bis 3, **dadurch gekennzeichnet, dass** das erste Stahlblechprofil (11) ein Hutprofil ist.

## Revendications

1. Poutre, comprenant :
un premier profilé en tôle d'acier (11) comprenant une partie supérieure (14), deux côtés (12, 13) et deux brides latérales (15, 16), et
une deuxième tôle d'acier (17) jointe par des soudures (18) aux brides latérales (15, 16) pour former une poutre profilée fermée, la deuxième tôle d'acier (17) formant un recouvrement (17),
le premier profilé en tôle d'acier (11) présentant une résistance à la traction supérieure à 1400 MPa et des zones souples (20) ayant une résistance à la traction inférieure à 1100 MPa autour des soudures (18),
le recouvrement (17) ayant une résistance à la traction supérieure à 1400 MPa, et
**caractérisée en ce que** les zones souples (20) se présentent sous forme de bandes (20) qui ont une largeur comprise entre la moitié de la largeur de la soudure (18) et trois fois la largeur de la soudure (18), et le premier profilé en tôle d'acier (11) ayant des zones de grande résistance ayant une résistance à la traction supérieure à 1400 MPa des deux côtés des bandes souples (20) et le recouvrement (17) ayant des bandes souples similaires à celles du premier profilé en tôle d'acier (11).

2. Poutre selon la revendication 1, **caractérisée en ce que** la soudure (18) comprend une rangée unique de points de soudure (18).

3. Poutre selon la revendication 2, **caractérisée en ce que** les bandes souples (20) ont une résistance à la traction comprise entre 500 et 1000 MPa.

4. Poutre selon l'une quelconque des revendications 1 à 3, **caractérisée en ce que** le premier profilé en tôle d'acier (11) est un profilé en forme de chapeau.
